# EUROPEAN PATENT SPECIFICATION

(11) **EP 3 890 570 B1**
(45) Date of publication and mention of the grant of the patent: **25.02.2026**
(21) Application number: 19895523.9
(22) Date of filing: 04.12.2019
(51) Int. Cl.: A47J 27/08, G05D 23/13, G05D 22/00, G05D 16/00, A23L 5/10, G06F 3/0488, F16C 33/12, F24C 15/02, C10B 45/00, F24C 15/16, A47B 77/08, F24C 15/32, F24C 7/08

(54) **INTEGRATED SMART, HEALTHY AND SAFE COOKING OVEN (PRESSURE OVEN)**
INTEGRIERTER INTELLIGENTER, GESUNDER UND SICHERER KOCHOFEN (DRUCKOFEN)
FOUR DE CUISSON INTÉGRÉ INTELLIGENT, SAIN ET SÛR (FOUR SOUS PRESSION)

(30) Priority: 09.12.2018 EG 2018091970
(43) Date of publication of application: 13.10.2021
(73) Proprietor: El-Tonsy, Husham, Hassan, Mohamed, Hussin, Cairo (EG)
(72) Inventor: El-Tonsy, Husham, Hassan, Mohamed, Hussin, Cairo (EG)
(74) Representative: Potter Clarkson
(86) International application number: PCT/EG2019/000028
(87) International publication number: WO 2020/119875

(56) References cited:
- WO-A1-2007/096695
- WO-A1-2015/032511
- WO-A1-2016/138828
- CN-A- 104 510 367
- CN-U- 205 385 985
- CN-U- 209 172 037
- JP-A- H09 196 383
- US-A1- 2008 246 379
- US-A1- 2009 133 684

## Description

### Technical Field :

Pressure oven for cooking in a healthy manner with nutrition facts by its own recipe and cooking technique.

### Background Art :

### The previous desian of ovens:

Started by using coal or chops of wood, then they used stove with gas with the updates they used electricity.

By the technology; microwave, convection ovens and combi steamer are invented with a high tech control.

### The problems in the previous ovens:

- The common problems are the vapor the fat, smoke, humidity into the parts of the sensors and cables in the oven that may cause fire.
- There're a lot of screws in some machines breaks down, it takes a long time for maintenance.
- Convection oven sometimes needs to turn the trey during cooking to get even cooking in all sides of the trey.
- Equipments misuse causing machine defaults that takes a long time to repair.
- The way of cooking of this machines loses the value of nutrition food.
- High cost due to corrosion and damage of some parts in some ovens.
- Unhealthy due to radiation waves for heating (microwave).
- The need for longer cooking time (higher energy consumption) which takes a long time to finish.
- A gas leak may occur, resulting in suffocation and fires.

JP H09 196383 A discloses a cooking apparatus having a cooking sound conversion means to compensate for the hearing loss in the elderly. Further relevant state of the art is found in CN 205 385 985 U, US 2009/133684 A1 and WO 2007/096695 A1.

### Summary of the Invention:

The scope of the invention is outlined in the appended claims.

### Disclosure Of The Invention :

### New in the invention:

integrated smart, healthy& safe cooking oven "fully automated pressure oven ".
1- It's a pressure oven; it cooks like a pressure pot.
2- It's designed like a puzzle so it could be dismantled and easy for transport.
3- Cooks for itseIf through intelligent cooking recipes that contain time, heating temperature, steam with understanding nutrition values of food and its technique such as;
   ➢ Food nutrition fact is the chef that has recipe nutrition ingredients from vitamins, fibers and minerals.
   ➢ If the lid of the pot is sealed properly so as not to let the vitamins evaporate with the steam.
   ➢ Temperature control with time control is pre-calculated in an advance in the software. It controls temperature, steam or fluid as the plant needs in which time and heat using valves, temperature control with the cooking time as each ingredient requires to preserve all vitamins and minerals in food.
4- The oven controls the amount of water required to cook the amount of food, so the oven was invented to cook according to the "Nutrition facts" calculations and medical analysis of person, so the cooker is a tool only with the oven.
5- The method of cooking by steam which is mixing (hot air+hot water) in a ball to provide a steam pressure up to 130°c steam.
6- For bakery: it ferments the bread through humidity control of the steam as the oven vacuums the steam after steaming the bread then switches the heat on automatically to bake the bread. So what really cook are the ingredients requirements of cooking without interfering of human.
7- The safety lock and the vacuum of door are designed to be a pressure oven: the oven door is a vacuum sealed and will not open unless it measures heat and pressure for the safety.
8- It's totally safe, hygienic, insulated and healthy.
9- 304 stainless-steel materials that could stand (heat, expansion, corrosion) and covered with glazed that could stand fats.
10- Reduces time of cooking by 80% so that it saves time and energy compared with other traditional pressure pots.
11- Each part in the oven is designed like drawers so it's easy for maintenance and transport (it's a puzzle).
12- All the oven parts are controlled by the computer which protects them from misuse as hardware and software are connected by embedded system through sensors.
13- It's fully automated system control by the recipe of food as the requirement of the cooking ingredients (flow pressure, temperature, steam or convection+ safety lock on or safety lock release).

This invention is related to high tech machine fully automated controlled by computer with a unique technique of cooking as nutrition facts requires through sensors that really manage the method of cooking as the person wishes. Also a database of all what's eatable in the whole world & recipes of an international cuisine as a database inside the software.
➢ There's a crosswise Z between the sandwich sides as there's a double sandwich sides, there's an insulator of glass wool between each layer + an insulator of space to maintain pressure and temperature inside the oven.
➢ The feedback of the computer are sensors (valves, flow meter, temp, pumps, release valves, vacuum sensor through the door pen bypass tubes control), even male and female knobs of cables of electricity when attached together, sensors allow the current flows for maximum safety in the circuits.

### 1.External components:

### In shape A:

It's designed to cook as a pressure pot through its high technique of its body frame welded as parts of sheet metal gathered or components as a puzzle, through a collecting screw bolt acting as a pressure knob part (3).
➢ The oven contains of external drawer units (water tank drawer part (5)- central control unit part (6)).
➢ All parts of the oven are designed from stainless-steel 304 materials.
➢ Cook top part (2) works like a touch pad to see videos+ food ingredients (recipes), it contains 3 or 4 or 5 eyes it depends on the model and the software controls which eye to cook on it the type of food+ the size of pot for the quantity of food.
➢ There's a holder in the pot to clip on the knob of the shower to release the amount of fluid part (1) that is required for cooking with required temperature by using flow meter to measure quantity of fluid through valves on the tube with temperature control and a heater around the pipe.

### 2.Internal components:

### In Shape B:

➢ Cooking chamber cooks with steam or heat or both according to required method of cooking; if the user wants to cook poultry in the oven or on the cooktop either ways have either technique, just tell the computer how you want your food in the oven or on the cooktop.
❖ If in the oven: steam poultry at 120°c until it is cooked, then vacuumed the steam from the oven after that the computer starts to fry either by 130°c steam or 148,89 °C of heat.
❖ On the cooktop: by socketing the knob shower into the socket of the pot lid then, we take it out of the pot which made of special material of granite that's non sticky and anti-scratch material. After it is boiled with the usage of shower (1\2 a cup of coffee of steamed water) at 120°c :130°c, it releases the fats of the poultry so that using this technique in frying without oil, butter or fats.
➢
> A heater surrounding the fan to get heat up to 148,89°C & steam unit fan part (1).
> pressure steam and heat are released by safety valves by calculating pressure converting into weight according to the design of layers of the frame and its design. For the over pressure lifting up weight to release the over pressure of the oven which is safer to use weight than spring part (2).
   ➢ It won't open until it reduces heat in the cabinet and pressure through the pressure relief valve and heat relief valve to guarantee the safety of the user after it finishes cooking. also sensors for cooking by pocking sensor into the food to measure food temp to control cooking and a timer control for cooking time.
➢ All nutrition facts data are entered in the computer software and in various techniques required as anybody wishes to eat so really who is cooking, the nutrition fact of the food.
➢ For example:
   It's well known that the time of cooking in traditional pressure pots such as these tables;

**(Oriental peas and carrots)**

| Timetable for Cooking or Steaming Fresh or Frozen Vegetables | | | | For 100 Servings, 1/4 Cup Each | | |
|---|---|---|---|---|---|---|
| | | | | **B0lLING** | | **STEAMING** |
| **Vegetables (As Purchased)** | **Fresh or Frozen** | **Amount to Purchase (Pounds)** | **Ready to Cook (Pounds)** | **Amount of Water (Quarts)** | **Coocking Time After Water Boils (Minutes)** | **Time at 5 Pounds Pressur (Minutes)** |
| Parsnips, 3" pieces | Fresh | 123 | 10.2 | 43/4 | 20 to 30 | 15 to 20 |
| Peas and carrots | Frozen | 9.2 | 9.2 | 1 | 8 to 10 | 3 to 5 |
| Peas, green | Fresh | 24.7 | 9.4 | 2 | 10 to 20 | 10 to 20 |
| shelled | Frozen | 9.9 | 9.9 | 1 | 5 to 10 | 3 to 5 |

It breaks after 3 minutes steaming; after choosing the method of cooking, if peas and carrots with meat or without, for how many people say 5 persons:
❖ Ingredients:
   (500 g peas +250 g carrots+150 g onions+7:10 g black pepper)
❖ Preparing: after handily washing vegetables,

o cutting onions into small cubes by a sharp knife so as not to lose nutrient of onions
o cutting carrots
o steam tomatoes in 1.30 minutes at 120°c in a sealed tight pot with a maximum amount of water (2.5 cups) then peeled from the skin, take the seeds out and whisk the tomatoes.

• Put all these ingredients after cutting together in the pot with tomato sauce (add 3 cups of soap if it is with meat +1.5 cup of water) at 120°c in 3 min with a well-sealed pot to preserve all vitamins and minerals.

**(Meat pressure-cooking instructions are below the fime table.)**

| Meat/Pooltry | Approximate Cooking Time (minutes) | Pressure Level |
|---|---|---|
| Beef, 1" (25 mm) cubes, 1 1/2 lb (700 g) | 10 to 15 | High |
| Beef, dressed, 2 lb (900 g) | 101015 | High |
| Beef, steak, rump, round, chuck or blade, 1 to 2" (25 to 50 mm) | 20 to 25 | High |
| Beef, stew meat, 1 1/2" (40 mm) cubes | 15 | High |
| Chicken, breasts, with bone in, 2 to 3 lb (900 to 1400 *g)* | 9 to 10 | High |
| Chicken, frozen, breasts or thighs, boneless | 7 to 10 | High |

| **Seafood & Fish** | **Fresh Cook Time (minutes)** | **Frozen Cook Time (minutes)** |
|---|---|---|
| Crab, whole | 2 - 3 | 4 - 5 |
| Fish, whole | 4 - 5 | 5 - 7 |
| Fish, fillet | 2 - 3 | 3 - 4 |
| Fish, steak | 3 - 4 | 4 - 6 |
| Lebster | 2 - 3 | 3 - 4 |
| Mussels | 1 - 2 | 2 - 3 |

These tables are examples of different designs of pressure pots but these designs are for pots, some of these charts are correct and some are not.

### The circulation theory in pressure cooking;

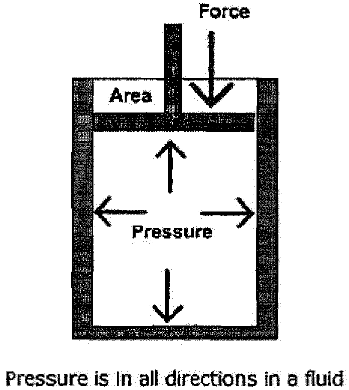

We have to understand the combination of heat Force temperature and steam to a pressure reaction.

Each of this system of cooking is a unique method of itself, unique because they are found by the experience of the cooking methods to different chefs or households. Now we have to understand that food experience comes from passion and creativity in even designing or serving the outlook of the plate or how our children like their food.

to get an idea how pressure works simply fluid to heat expanding; fluid which works like 4 arrows in the pot horizontally and vertically trying to run away from heat which is mainly in the center. then pressure runs away by returning back to the forest food to cool down by the coolness of the food which goes back to fluid and pressed into the food. that continuous heat that's added to the pot makes that valuable processing inside the pot cooks faster by 80% more than any understanding cooking in the world.

### For example:

300 g of beef,1" in thick from the tenderloin cut without taking the nerve surrounding and the fats away from it; as long as we did not beat the thickness of the meat to flatten it under forest with 8° below zero under low temperature, it depends on the technique it could be cooked in 3 min. the same cut of meat could be cooked in half an hour in an ordinary pan of the grill under low temperature to maintain the natural flavor of food both ways are right to reach the first cut well done in 3 min.

### In shape(C):

### The ball mixture process;

Ordinary water pipe from the water line fills the water drawer by valve filling about 20 liters in the tank, heated to 80°c then pump sucks 500 ml of hot water per a minute reheated to 110°c measured by flow meter and temperature control entered to the ball with 500 ml at the same time the second tube pressured 500 ml of hot air per a minute at 110°c measured by flow meter and temperature control too. Both tubes enter the ball in an angle ^35° facing each other and the angle of the cut on the tip of the pipe is ^35 facing each other. Then the mixture (hot water- hot air) reheated to the required heat temperature followed by (flow meter, temperature control and humidity control), the tube passes in front of a fan into a box that cubes the steam in the cooking chamber of the oven. The over leaded pressure that is not needed in the oven it is released by safety valves that work by weight.

### In shape(D):

Other unique features are sensors and electricity; connected like a plug or like a USB, all parts are male and female. When pulling any electric parts, the computer turn-off electricity automatically by the sensor, designed to be steam proof heat resistant and fire proof.

All wires or tubes are designed to be heat resistant, fireproof, steam proof and electrical current proof for the safety of the user.

### In shape (E):

➢ Double shot for the bakery to cool down, through shower built-in in the sealing of the oven part (3).

➢ 2-led lights that could stand the pressure and heat part (4).
➢ there's a steam tube in front of a fan that circles the steam inside the oven part (5).
➢ The drainage of the oven works as a double action: (releases fluid from a steam into a drawer then allows cold air in the oven from the same tube vacuuming from the releasing valves of the steam cabinet and heat cabinet through by bass tube built-in the oven that vacuums heat and steam from the oven in the case of bakery or the case of opening door for safety to open the safety lock of the oven part (6).

### In shape (H):

➢ Oven door equipped with a suction unit for safety, it will not open until after finishing cooking through alarm to indicate the end of cooking then it measures pressure_ heat to open the safety lock.
> if you are in a hurry after cooking, the oven vacuums steam and heat from the cooking chamber by 2 safety valves through an intelligent by bass pipe system with a suction pump to a by bass tube by the ventilation of release pump out of the chimney pipe.
   (the door frame): there is a suction surround the frame between 2 magnetic rubber frames. the safety lock pin of the door when it reaches the entrance of the frame female, it triggers a vacuum that sucks the door.
➢ the oven door with the glass is designed to resist heat and pressure, the door itself is insulated with a glass fiber between them like a sandwich, the formula of the glass door is 10 mm thick with 2 mm rubber coating surrounding the frame, it is 50 mm in depth a square diameter around the glass.

### In shape(I):

Even the tubes of the oven are designed to be dismantled within seconds like a plug of a male and female with a pressure jewans between them with a special design clip; all pipes are designed to maintain temp inside, also the heating system of the pipes are designed in a case acting as a mirror to reflect heat on the pipe with a highly insulated package surrounding with a clip.

### 3. Operation method:

Once selecting the recipe from the menu stored in the software by having an international cuisine {modern French culinary art, meat dishes, bakery, sweets, cakes, fish and shellfish, vegetables).

After preparing the required items, the oven will take over and cook by itself.

Also, all the information on nutrition for the food fact and knowledge (according to the person medical condition).

The oven works {as a pressure pot}, it could fry without oil by dry steam.

The oven then sucks air to seal the oven door then turn on the safety lock to prevent anyone from opening the oven door then determine the amount of inputs required (water - heat - steam) depending on the amount of food according to how many people and cooking methods.

The water 15 then withdrawn from the main water supply to the water tank then heated to about 110 ° C (the water 15 then raised by a pump to be mixed with hot air into a ball content and the mixture is heated up to 130°c controlled through sensors).

After finishing cooking measured by sensors inside the food and releasing overpressure and heat then the oven door is ready to open.

There is a general electric cable for the oven containing (Stabilizer + fuse) so that it gives full protection of any electrical connection, designed to resist high temp.

All electricity wires are individually distributed inside (duct) so that the wires do not contact each other in a completely safe way and the wires are connected through fuse for 100% protection for the user from the dangers of electricity.

Maximum pressure needed 4 bar and 2 bar for the minimum.

### Method of exploitation:

The invention is a smart, healthy and safe electronic cooking oven. All its internal and external operations are managed automatically through a control and processing unit (intelligent and advanced integrated computer). The oven is electric and cooked in a steam pressure manner.

### The Brief Description of drawings:

**Shape( A )shows external oven components where:**
1-water tape
2-electric cooktop
3-collecting screw
4-oven door
5-hot water tank
6-electric keys cabinet

**Shape( B )shows internal** oven **components where:**
1-heat fan cabinet
2-safety valve
3-double shot shower
4-led lights
5-steam fan cabinet
6-drainage

**▪ Shape (C) shows** steam **process where:**
   1-hot water inlet
   2-pump
   3\13-heater
   4\8\14-flow meter sensor
   5\7\15-temperature control
   6-ball mixture
   9-electric copper connector
   10-heater coils
   11-suction holes
   12-hot air unit
   16-humidity control
   17-mixture (hot water + hot air) outlet

   ▪ **Shape (D) shows section of electric connecting cables& sensors where:**
      a-female electric connector
      b- male electric connector
   **▪ Shape (E) shows double shot valve for bakery where:**
      1-fresh water inlet
      2-double solenoid valve shot
      3-double shot outlet

      ▪ **shape (F) shows oven right side where:**
         1- outer metal sheet
         2- press sheet
         3- zz metal support
         4- u-metal frame
         5- press sheet
         6- inner metal sheet
         7- insulator of glass wool

         ▪ **shape (G) shows oven detailed column where:**
            1- column
            2- inner cylinder
            3- screw bolt
            4- pressure collecting bolt
         **• shape (H) shows oven detailed door\frame where:**
            a) Detailed door:
               1- fiber glass
               2- Safety lock pin
               3- Wooden handle
               4- Outer insulated layers
               5- Hinge position
            b) Door frame:
               1- Safety lock holes
               2- Vacuum holes
               3- Magnetic frame
            c) Suction door unit:
               1- Suction pipes
               2- Suction motor
         **▪ shape (I) shows detailed steam pipes where:**
            1- female entrance pipe
            2- gasket
            3- male entrance pipe
            4- lid latch toggle
         **▪ Shape (J) shows detailed water tank where:**
            1- Outer water tank contains male electric connector
            2- Insulator of glass wool
            3- Inner water tank
            4- Metal block contains female electric connector
         **▪ Shape (K) shows detailed safety valves process where:**
            (a) Safety release valves:
               1- Heat safety valve
               2- Cooking chamber safety valve
               3- Intake bypass tube contains solenoid valve
               4- Outlet pipe
               5- Suction motor
            (b) drainage drawer:
               1- drainage contains solenoid
               2- air compensation slots for the suction
            (c)detailed safety valves:
               1- outer casing
               2-inner casing
               3-weight of metal
               4-connecting cap
               5-intake bypass contains solenoid valve
         **▪ Shape (L) shows cooktop where:**
            1-duct for electric cables
            2-duct for sensors
            3-male electric connector
            4-female sensor connector
            5-female network connector
            6-male sensor USB
            7-female electric connector
         **▪ Shape (M) shows heat cabinet unit where:**
            1-heat box
            2- male electric connector
            3-motor
            4-hole for safety valve
            5-handle
            6-heater
            7-turbine fan

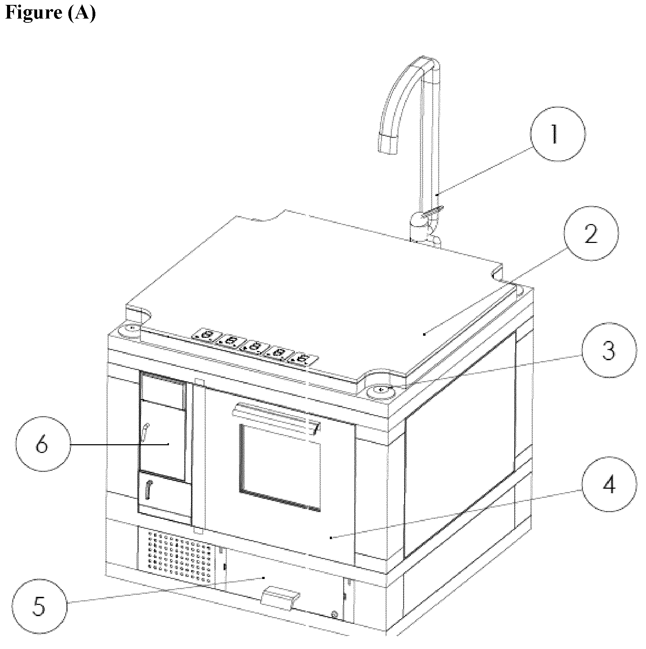

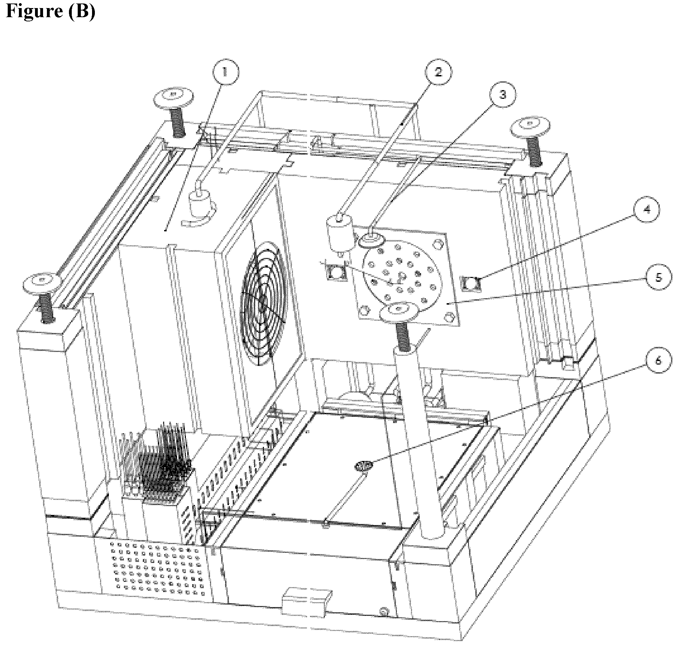

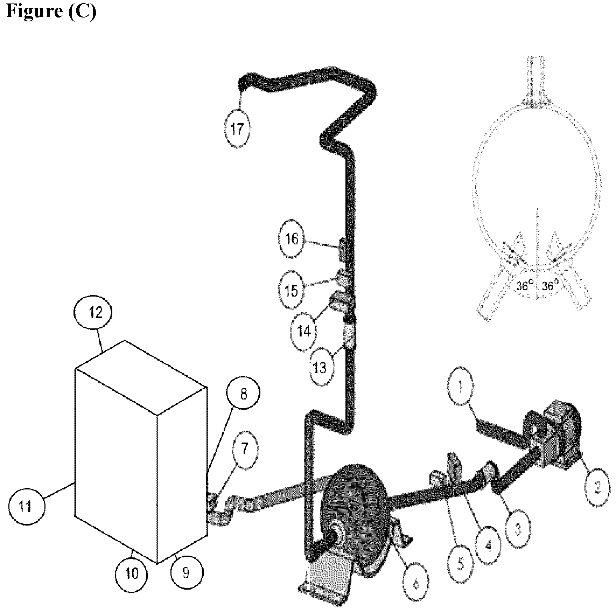

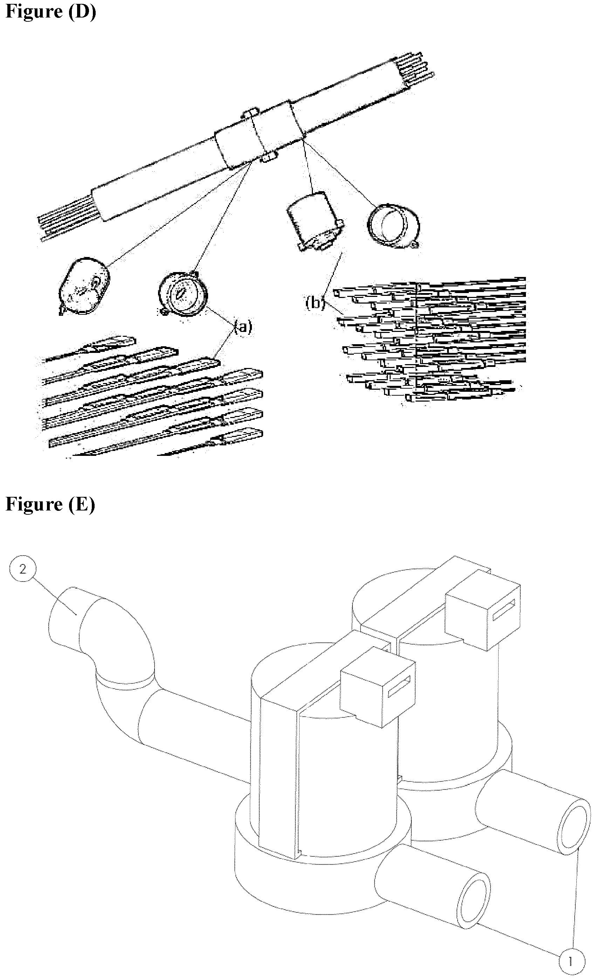

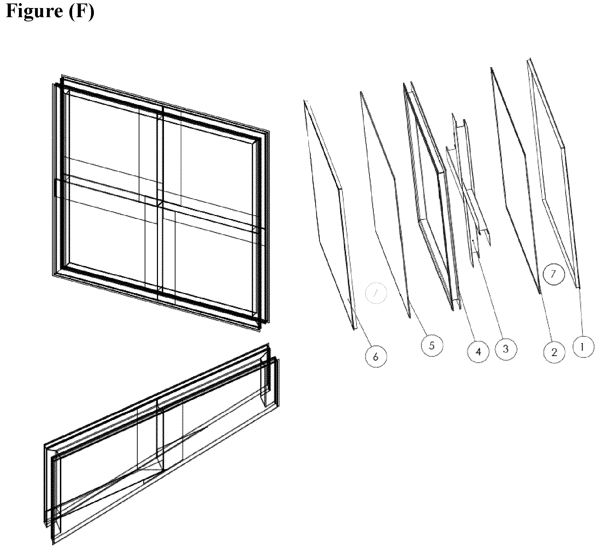

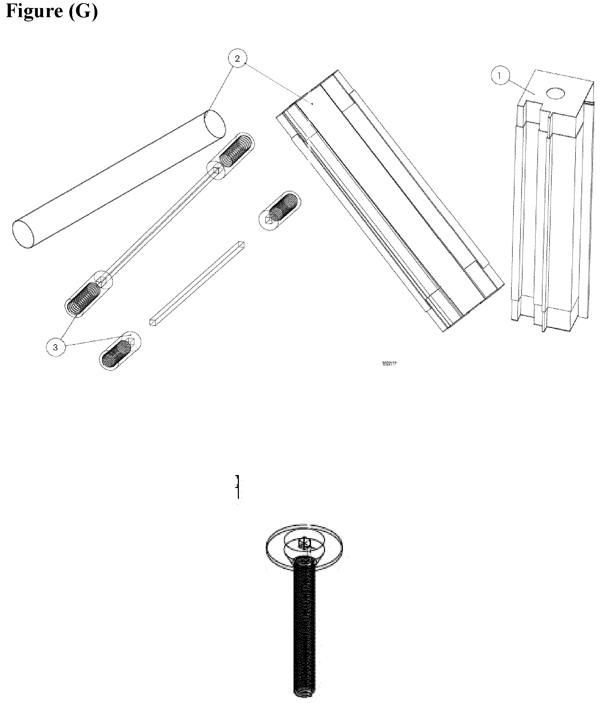

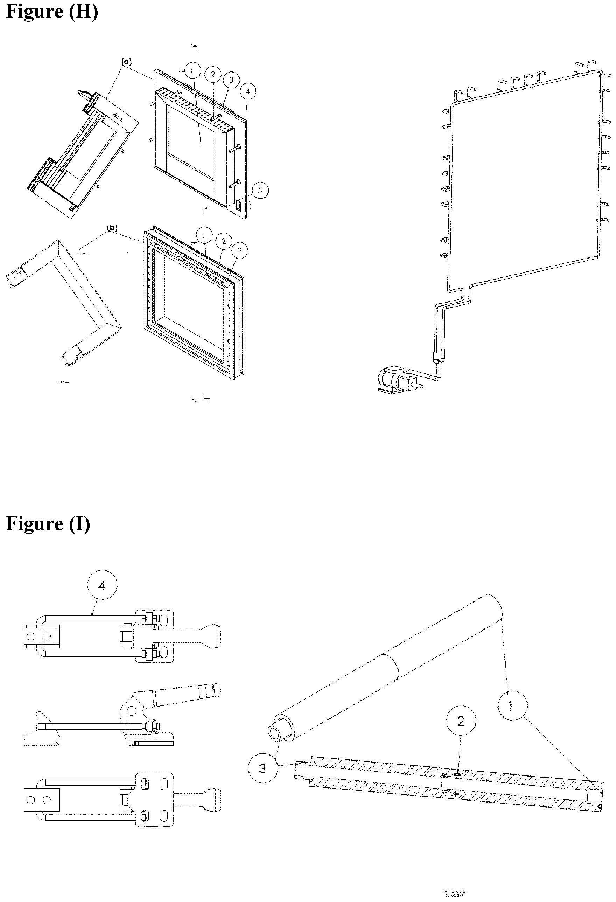

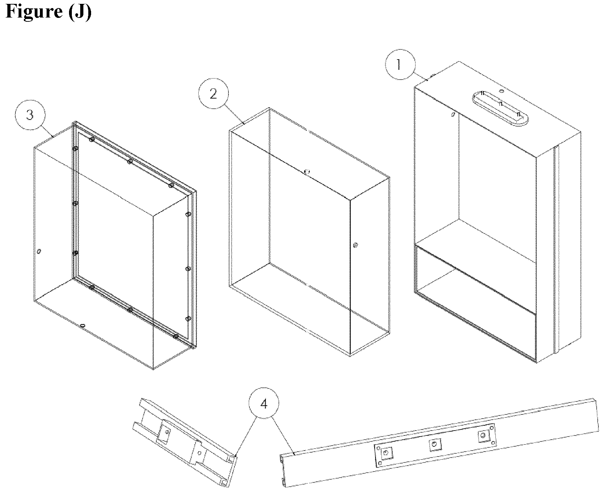

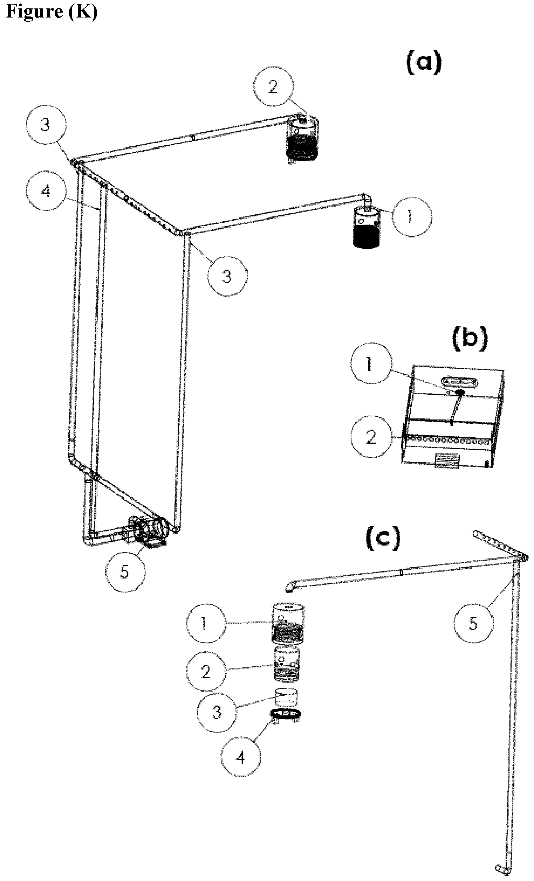

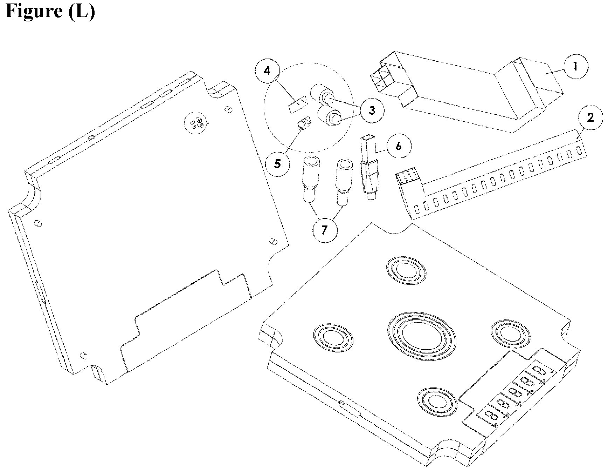

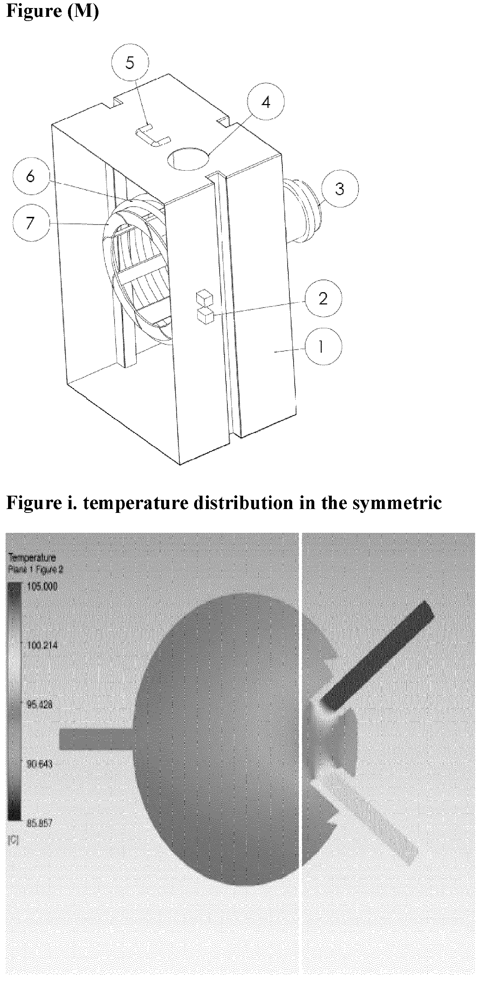

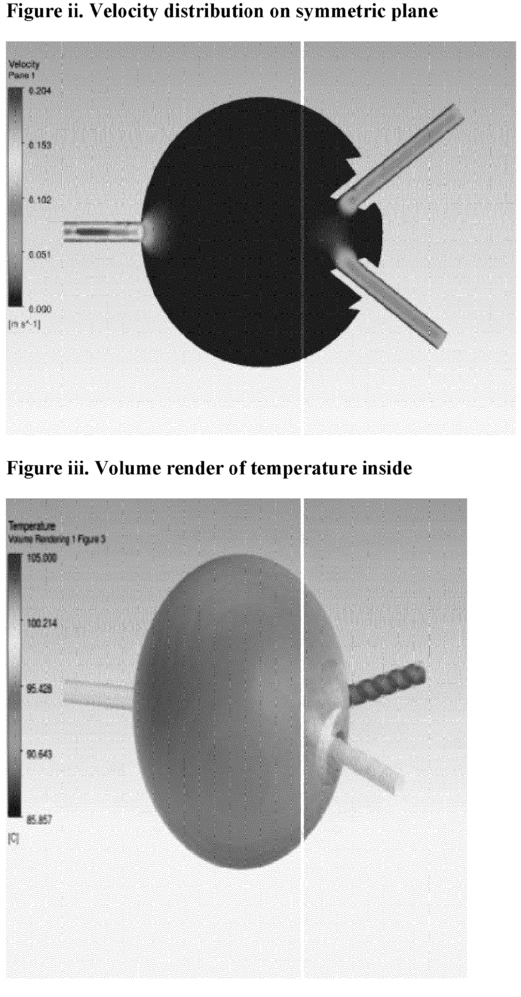

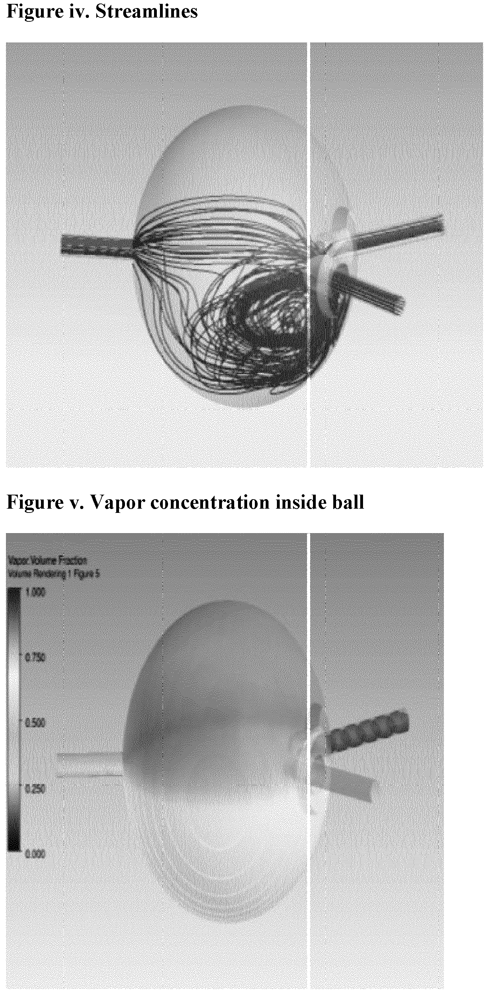

## Claims

1. A pressure-cooking oven comprising a
- heating cabinet including a housing and turbine fan surrounding with a heater operating with a motor shaft;
**characterised by**:
- A cabinet of cooking including a plurality of oven components of a base of sheet metal layers, sidewalls (right walls, back walls, and left walls) and a ceiling wall connected with each other through 4 columns like a puzzle;
- A steam cabinet (B-5) including a housing and fan with the motor being configured to blow steam from an external steam pipe into a cooking chamber;
- A speaker out with multinational in different languages configured to give data to the user of how to choose the recipe ingredients of natural products and how to make the difference of natural food and unnatural within details of nutrition facts in a medical point of view and nutrition facts point of view;
- A top water tap (A-1) including hot and cold water configured to be controlled to fill water in pots on cook top by a special design socket in a pot to be clipped on by this spring shower;
- A power supply control cabinet including a screen touch control and electric keys box being configured to control all oven operations;
- 8 collecting pressure screws (A-3) configured to be main collecting oven bolts to maintain and tighten joints together by a pressure and heat rubber;
- An oven door assembly being to stand pressure and its frame connected to oven parts like a puzzle;
- A bottom water tank (A-5) being configured to heat water for steam;
- A cook top (A-2) and oven configured to work by a fingerprint or password or phone control by a voice sound;
- the top cooktop being configured to be touch computerized to cook by itself through the recipes nutrition facts as the computer chooses which heater will be used for which particular food and pot size according to food nutrition facts;
- 4 columns in the oven corners being configured to attach oven walls with basement and ceiling;
- The pressure flow meter surrounded the steam tubes to measure flow inside the tube by a magnetic field to protect heater.

2. The pressure-cooking oven of claim 1 wherein the walls of the cabinet of cooking are further **characterized by**;
o Each wall layers being welded together after setting a ZZ shape between outer and inner sandwiches
o the tips of the ZZ shape are welded surrounding a frame to stand pressure and prevent buckling.

3. The pressure-cooking oven of claim 1 comprising a heating unit, wherein the heating unit is **characterized by**:
- A cabinet of sheet metal like a drawer;
- A heater to get 250°:300° F (121,11°C: 148,89°C);
- A motor shaft;
- A fan with 4 twisted wings.

4. The pressure-cooking oven of claim 1 wherein the cook top is further **characterized by**:
- Sensors for cooking temperature and fluid;
- A touch control containing recipes and nutrition data.

5. The pressure-cooking oven of claim 1 wherein the oven door assembly is further **characterized by**:
- A doorframe, which includes suction unit tubes with a suction motor in the oven base, wherein the door frame is surrounded with gasket containing a magnetic;
- Outer sheet metal layers' assembly, insulated with glass fiber-containing 6 safety lock pins, wherein one of them is a triggered pin shorter than the others;
- An inner sheet metal glass frame;
- 2 layers of glass.

6. The pressure-cooking oven of claim 1 wherein the bottom water tank is further **characterized by**:
- the bottom water tank comprising:
o A main water tank sealed with a fiber glass, wherein a heater is configured to keep the water at 80°C continuously and wherein the main water tank maintains enough water for cooking even for cook top or oven that's reached up to 20 liters;
o Temperature control to measure and control the internal temperature;
o A solenoid valve to maintain a required measurement of a water pipe;
- the bottom water tank comprising:
o A drainage;
o A pressure valve control inside the drainage, wherein the pressure valve control is configured to open or close to suck humidity from the oven or to suck heat and steam through a safety valve by replacing air into the cabinet of cooking through holes in the bottom water tank.

7. The pressure-cooking oven of claim 1 wherein the mixture unit includes:
- 2 inlets of 2 equal pressure-flow hot air and hot water measured by a flow meter and temperature control;
An outlet configured to provide a hot air-hot water mixture for reheating by a heater followed by flow meter, temperature control, and humidity control.

## Patentansprüche

1. Druckkochofen, umfassend einen
- Heizungsschrank, der ein Gehäuse und ein Turbinengebläse einschließt, das einen mit einer Motorwelle betriebenen Heizer umgibt;
- **gekennzeichnet durch**:
- einen Schrank, der eine Vielzahl von Ofenkomponenten aus einer Basis von Blechschichten, Seitenwänden (rechte Wände, Rückwände und linke Wände) und einer Deckenwand einschließt, die durch 4 Säulen puzzleartig miteinander verbunden sind;
- einen Dampfschrank (B-5), der ein Gehäuse und einen Lüfter einschließt, wobei der Motor konfiguriert ist, um Dampf aus einem externen Dampfrohr in eine Kochkammer zu blasen;
- einen Sprecher, der multinational in verschiedenen Sprachen konfiguriert ist, um dem Benutzer Informationen darüber zu geben, wie er die Rezeptzutaten von Naturprodukten auswählen kann und wie er den Unterschied zwischen natürlichen und unnatürlichen Lebensmitteln in den Details der Nährwertangaben aus medizinischer Sicht und in Bezug auf die Nährwertangaben erkennen kann;
- einen Wasserhahn (A-1), der heißes und kaltes Wasser einschließt, das konfiguriert ist, um gesteuert zu werden, um Wasser in Töpfe auf der Kochplatte zu füllen, durch eine spezielle Designbuchse in einem Topf, der durch diese Federdusche angeklippt wird;
- einen Steuerschrank der Energieversorgung, der einen Bildschirm mit Berührungssteuerung und einen elektrischen Schlüsselkasten einschließt, der konfiguriert ist, um alle Ofenoperationen zu steuern;
- 8 Sammeldruckschrauben (A-3), die konfiguriert sind, um als Hauptsammelofenbolzen zu fungieren und die Verbindungen durch einen Druck- und Wärmegummi zusammenzuhalten und festzuziehen;
- eine Backofentürbaugruppe, die dem Druck standhält und deren Rahmen wie ein Puzzle mit den Ofenteilen verbunden ist;
- einen unteren Wassertank (A-5), der konfiguriert ist, um Wasser für Dampf zu erhitzen;
- ein Kochfeld (A-2) und einen Ofen, die konfiguriert sind, um durch einen Fingerabdruck oder ein Passwort oder eine Telefonsteuerung durch eine Stimme zu funktionieren;
- das obere Kochfeld konfiguriert ist, um computergesteuert durch die Nährwertangaben der Rezepte selbst zu kochen, da der Computer auswählt, welcher Heizer für welche bestimmte Speise und Topfgröße nach den Nährwertangaben verwendet wird;
- 4 Säulen in den Ofenecken, die konfiguriert sind, um die Ofenwände mit dem Boden und der Decke zu verbinden;
- der Druckmesser die Dampfrohre umgibt, um den Durchfluss im Inneren des Rohres durch ein Magnetfeld zum Schutz des Heizers zu messen.

2. Druckkochofen nach Anspruch 1, wobei die Wände des Schranks ferner **gekennzeichnet sind durch**:
o jede Wandschicht wird zusammengeschweißt, nachdem eine ZZ-Form zwischen den äußeren und inneren Sandwiches gesetzt wurde
o die Spitzen der ZZ-Form sind um einen Rahmen herum geschweißt, um dem Druck standzuhalten und ein Ausknicken zu verhindern.

3. Druckkochofen nach Anspruch 1, umfassend eine Heizeinheit, wobei die Heizeinheit **gekennzeichnet ist durch**:
- einen Schrank aus Blech wie eine Schublade;
- einen Heizer, um 250°:300 °F (121,11 °C: 148,89 °C) zu erhalten;
- eine Motorwelle;
- einen Lüfter mit 4 gedrehten Flügeln.

4. Druckkochofen nach Anspruch 1, wobei die Kochplatte ferner **gekennzeichnet ist durch**:
- Sensoren für Kochtemperatur und Fluid;
- eine Touchsteuerung mit Rezepten und Nährwertangaben.

5. Druckkochofen nach Anspruch 1, wobei die Ofentürbaugruppe ferner **gekennzeichnet ist durch**:
- einen Türrahmen, der Ansaugeinheitsrohre mit einem Ansaugmotor in der Ofenbasis einschließt, wobei der Türrahmen von einer Dichtung umgeben ist, die einen Magneten enthält;
- äußere Blechschichtbaugruppen, isoliert mit Glasfasern, die 6 Sicherheitsstifte enthalten, wobei einer von ihnen ein ausgelöster Stift ist, der kürzer als die anderen ist;
- einen inneren Blechglasrahmen;
- 2 Schichten aus Glas.

6. Druckkochofen nach Anspruch 1, wobei der untere Wassertank ferner **gekennzeichnet ist durch**:
- den unteren Wassertank, umfassend:
o einen Hauptwassertank, der mit einer Dichtung aus Glasfaser versehen ist, wobei ein Heizer konfiguriert ist, um das Wasser kontinuierlich auf 80 °C zu halten, und wobei der Hauptwassertank auch für Kochplatten oder Backöfen, die bis zu 20 Liter fassen, genügend Wasser zum Kochen bereithält;
o Temperatursteuerung, um die Innentemperatur zu messen und zu steuern;
o ein Magnetventil zur Aufrechterhaltung eines bestimmten Maßes in einem Wasserrohr;
- den unteren Wassertank, umfassend:
o eine Drainage;
o eine Druckventilsteuerung im Inneren der Drainage, wobei die Druckventilsteuerung konfiguriert ist, um sich zu öffnen oder zu schließen, um Feuchtigkeit aus dem Ofen abzusaugen oder um Hitze und Dampf **durch** ein Sicherheitsventil abzusaugen, indem Luft **durch** Löcher im unteren Wassertank in den Schrank ersetzt wird.

7. Druckkochofen nach Anspruch 1, wobei die Mischeinheit Folgendes einschließt:
- 2 Einlässe für 2 gleiche Druckströme von Heißluft und Heißwasser, gemessen durch einen Durchflussmesser und eine Temperatursteuerung;
einen Auslass, der konfiguriert ist, um eine Mischung aus heißer Luft und heißem Wasser zur Wiedererwärmung durch einen Heizer bereitzustellen, gefolgt von einem Durchflussmesser, einer Temperatursteuerung und einer Feuchtigkeitssteuerung.

## Revendications

1. Four à cuisson sous pression comprenant une
- armoire chauffante comportant un boîtier et un ventilateur à turbine entourant un élément chauffant fonctionnant avec un arbre de moteur ;
**caractérisé par** :
- une armoire de cuisson comportant une pluralité d'éléments de four constitués d'une base de couches de tôle, de parois latérales (parois droites, parois arrières et parois gauches) et d'une paroi de plafond reliés entre eux par 4 colonnes comme un puzzle ;
- une armoire à vapeur (B-5) comportant un boîtier et un ventilateur dont le moteur est configuré pour souffler de la vapeur d'un tuyau de vapeur externe dans une chambre de cuisson ;
- un haut-parleur multilingue configuré pour fournir à l'utilisateur des données sur la manière de choisir les ingrédients de recettes à base de produits naturels et sur la manière de faire la différence entre les aliments naturels et non naturels, en détaillant les informations nutritionnelles d'un point de vue médical et d'un point de vue nutritionnel ;
- un robinet d'eau de dessus (A-1) comportant de l'eau chaude et de l'eau froide configuré pour être commandé pour remplir d'eau les casseroles sur la plaque de cuisson par une prise de conception spéciale dans une casserole à clipser par cette douchette à ressort ;
- une armoire de commande d'alimentation électrique comportant un panneau de commande tactile à écran et un boîtier de touches électriques est configurée pour commander toutes les opérations du four ;
- 8 vis de pression de collecte (A-3) configurées comme boulons principaux du four de collecte pour maintenir et serrer les joints ensemble par un caoutchouc de pression et de chaleur ;
- un ensemble de porte de four étant conçu pour résister à la pression et son cadre étant relié aux pièces du four comme un puzzle ;
- un réservoir d'eau inférieur (A-5) configuré pour chauffer l'eau pour la production de vapeur ;
- une plaque de cuisson (A-2) et un four configurés pour fonctionner par empreinte digitale ou mot de passe ou par commande téléphonique par un son vocal ;
- la plaque de cuisson étant configurée pour être tactile et informatisée afin de cuire toute seule en fonction des informations nutritionnelles des recettes, l'ordinateur choisissant quel élément chauffant sera utilisé pour quel aliment et quelle taille de casserole selon les informations nutritionnelles des aliments ;
- 4 colonnes dans les coins du four sont configurées pour relier les parois du four au sous-sol et au plafond ;
- le débitmètre à pression étant entouré des tubes de vapeur pour mesurer le débit à l'intérieur du tube grâce à un champ magnétique afin de protéger le réchauffeur.

2. Four à cuisson sous pression selon la revendication 1, dans lequel les parois de l'armoire de cuisson sont également **caractérisées par** ;
o chaque couche de paroi étant soudée ensemble après la formation d'un motif en forme de ZZ entre les sandwichs extérieur et intérieur ;
o les extrémités de la forme en ZZ sont soudées autour d'un cadre pour résister à la pression et éviter le flambage.

3. Four à cuisson sous pression selon la revendication 1 comprenant une unité chauffante, dans lequel l'unité chauffante est **caractérisée par** :
- Une armoire en tôle, comme un tiroir ;
- un élément chauffant pour obtenir 250°:300° F (121.11°C: 148.89°C) ;
- un arbre moteur ;
- un ventilateur à 4 ailes torsadées.

4. Four à cuisson sous pression selon la revendication 1, dans lequel la plaque de cuisson est également **caractérisée par** :
- des capteurs pour la température et le fluide de cuisson ;
- un panneau de commande tactile contenant des recettes et des informations nutritionnelles.

5. Four à cuisson sous pression selon la revendication 1, dans lequel l'ensemble de porte de four est également **caractérisé par** :
- un cadre de porte, comportant des tubes d'unité d'aspiration avec un moteur d'aspiration dans la base du four, dans lequel le cadre de porte est entouré d'un joint contenant un aimant ;
- un ensemble de couches de tôle extérieure, isolées avec 6 goupilles de verrouillage de sécurité contenant de la fibre de verre, dans lequel l'une est une goupille déclenchée plus courte que les autres ;
- un cadre intérieur en tôle de verre ;
- 2 couches de verre.

6. Four à cuisson sous pression selon la revendication 1, dans lequel le réservoir d'eau inférieur est également **caractérisé par** :
- le réservoir d'eau inférieur comprenant :
o un réservoir d'eau principal scellé avec de la fibre de verre, dans lequel un élément chauffant est configuré pour maintenir l'eau à 80 °C en permanence et dans lequel le réservoir d'eau principal contient suffisamment d'eau pour la cuisson, même pour une plaque de cuisson ou un four, jusqu'à 20 litres ;
o la commande de la température pour mesurer et commander la température interne ;
o une électrovanne pour maintenir une mesure requise dans une conduite d'eau ;
- le réservoir d'eau inférieur comprenant :
o un système de drainage ;
o une vanne de régulation de pression à l'intérieur du système de drainage, dans lequel la vanne de régulation de pression est configurée pour s'ouvrir ou se fermer afin d'aspirer l'humidité du four ou d'aspirer la chaleur et la vapeur à travers une soupape de sécurité en remplaçant l'air dans l'armoire de cuisson par des trous dans le réservoir d'eau inférieur.

7. Four à cuisson sous pression selon la revendication 1, dans lequel l'unité de mélange comporte :
- 2 entrées d'air chaud et d'eau chaude à débit égal, mesurées par un débitmètre et un régulateur de température ;
une sortie configurée pour fournir un mélange d'air chaud et d'eau chaude destiné à être réchauffé par un élément chauffant, suivie d'un débitmètre, d'un régulateur de température et d'un régulateur d'humidité.
